# EUROPÄISCHE PATENTSCHRIFT

(11) **EP 3 527 064 B1**
(45) Veröffentlichungstag und Bekanntmachung des Hinweises auf die Patenterteilung: **06.10.2021**
(21) Anmeldenummer: 19151765.5
(22) Anmeldetag: 15.01.2019
(51) Int. Cl.: A01F 15/04, A01F 15/08

(54) **LANDWIRTSCHAFTLICHE BALLENPRESSE SOWIE VERFAHREN ZU DEREN BETRIEB**
AGRICULTURAL BALING PRESS AND METHOD FOR OPERATING SAME
PRESSE À BALLES AGRICOLE AINSI QUE SON PROCÉDÉ DE FONCTIONNEMENT

(30) Priorität: 20.02.2018 DE 102018103765
(43) Veröffentlichungstag der Anmeldung: 21.08.2019
(73) Patentinhaber: Usines CLAAS France S.A.S, 57140 St. Rémy / Woippy (FR)
(72) Erfinder: Hesselmann, Ulrich, 54439 Saarburg (DE); Fritsch, Jeremie, 57160 Moulins-lès-Metz (FR); Maurer, Michel, 57200 Sarreguemines (FR); Wucher, Renaud, 57070 Metz (FR); Walter, Thierry, 57050 Longeville-lès-Metz (FR)
(74) Vertreter: Budach, Steffen

(56) Entgegenhaltungen:
- EP-A1- 0 819 374
- EP-A1- 2 986 101
- DE-U1- 9 206 232

## Beschreibung

Die vorliegende Anmeldung betrifft eine landwirtschaftliche Ballenpresse gemäß dem Oberbegriff von Anspruch 1. Weiterhin betrifft die vorliegende Anmeldung ein Verfahren zum Betrieb einer solchen Ballenpresse gemäß dem Oberbegriff von Anspruch 6.

Ballenpressen werden in aller Regel von einer Arbeitsmaschine, insbesondere einem Trecker, gezogen und angetrieben. Da Ballenpressen typischerweise nicht über einen eigenen Antrieb, beispielsweise einen Verbrennungsmotor, verfügen, wird die zum Betrieb der Ballenpresse erforderliche Energie von der jeweiligen Arbeitsmaschine bereitgestellt. Dies erfolgt beispielsweise über eine Antriebswelle der Arbeitsmaschine, an die externe Maschinen angeschlossen und auf diese Weise betrieben werden können. Über diese Antriebswelle wird ein Drehmoment zur Verfügung gestellt, das mittels eines Drehmomentanschlusses der Ballenpresse von der Arbeitsmaschine abgenommen und weiter zum Betrieb der Ballenpresse verwendet werden kann. Insbesondere für solche Ballenpressen, die - wie im Rahmen der vorliegenden Anmeldung - zur Herstellung von quaderförmigen Ballen, beispielsweise Strohballen, geeignet sind, ist es erforderlich, das jeweilige Verdichtungsorgan, mittels dessen innerhalb eines Verdichtungskanals der Ballenpresse sukzessive quaderförmige Ballen gepresst werden, mechanisch anzutreiben. Hierzu umfasst die Ballenpresse ein Übertragungssystem, mittels dessen ein mittels des Drehmomentanschlusses von der jeweiligen Arbeitsmaschine übernommenes Drehmoment derart übertragen wird, dass schließlich das Verdichtungsorgan oszillierend innerhalb des Verdichtungskanals hin und her bewegbar ist.

Das Übertragungssystem umfasst mindestens eine Übertragungswelle, mindestens ein Schwungrad sowie mindestens eine Bewegungseinrichtung. Die Verwendung eines Schwungrades dient dazu, Belastungsspitzen, die auf das Verdichtungsorgan wirken, zu überwinden und auf diese Weise eine Überlastung des Übertragungssystems sowie einen übermäßigen Verschleiß desselben zu vermeiden.

Ballenpressen der eingangs beschriebenen Art sind im Stand der Technik bereits bekannt. Hierzu wird beispielsweise auf die Europäische Patentanmeldung EP 1 974 601 A1 verwiesen. Diese befasst sich mit der Problematik eines Startvorgangs solcher Ballenpressen. Besagter Startvorgang weist oftmals die Schwierigkeit auf, dass unmittelbar beim Start der Ballenpresse ein erhebliches Leistungsniveau der Antriebswelle der Arbeitsmaschine gefordert ist. Dies ist insbesondere darauf zurückzuführen, dass Ballenpressen stetig wachsen um immer Größere Ballen zu pressen. Entsprechend werden heutige Ballenpressen oftmals mit vergleichsweise großen und schweren Schwungrädern ausgestattet. Es versteht sich, dass diese ausgehend von ihrem Stillstand aufgrund ihres erheblichen Trägheitsmoments besonders energieintensiv beschleunigt werden müssen, um eine erforderliche Arbeitsdrehzahl zu erreichen. Die benötigte Leistung übersteigt vielfach das von der jeweiligen Arbeitsmaschine über die Antriebswelle zur Verfügung stellbare Leistungsniveau, sodass in der Praxis beispielsweise auf eine intermittierende Betätigung der Antriebswelle ausgewichen wird. Auf diese Weise wird das Schwungrad gewissermaßen stoßweise beschleunigt. Diese Betriebsweise hat jedoch den wesentlichen Nachteil, dass die beteiligten Komponenten des Antriebsstrangs sowohl der Arbeitsmaschine als auch der Ballenpresse wiederholt erheblichen Lastspitzen ausgesetzt werden, was zu einem stark beschleunigten Verschleiß führt.

Gleichzeitig ist im Zuge eines solchen Startvorgangs einer Ballenpresse die an dem Verdichtungsorgan anliegende Leistung ebenfalls gering, sodass eine während des Startvorgangs gepresster Ballen merklich schlechter komprimiert ist als dies im Rahmen des normalen Arbeitsbetriebs der Ballenpresse eigentlich der Fall sein sollte. Ein im Zuge des Anfahrens des Verdichtungsorgans innerhalb des Verdichtungskanals unmittelbar wirkender Gegendruck, den das Verdichtungsorgan unmittelbar gegen einen noch von dem letzten Betrieb der Ballenpresse stammenden, innerhalb des Verdichtungskanals befindlichen Ballen aufbringen muss, bedarf zudem zusätzlicher Leistung während des Startbetriebs.

Die genannte Europäische Patentanmeldung versucht diese Probleme mittels einer Anlaufeinrichtung zu lösen, wobei besagte Anlaufeinrichtung dazu dient, die Arbeitsmaschine zumindest während eines Startbetriebs der Ballenpresse zu unterstützen und auf diese Weise eine sich initial einstellende Drehmomentspitze "abzufedern". Auch ermöglicht die bekannte Anlaufeinrichtung die Verwendung von Arbeitsmaschinen zum Antrieb der jeweiligen Ballenpresse, die vergleichsweise geringe Leistungsniveaus aufweisen. Somit hat es sich in der Praxis als eine denkbare Lösung für das bekannte "Anfahrproblem" von Ballenpressen etabliert, diese mit besonders leistungsfähigen Arbeitsmaschinen zu betreiben, die dazu imstande sind, das zur Beschleunigung des Schwungrades und zur Überwindung des auf das Verdichtungsorgan wirkenden Gegendrucks notwendige Drehmoment während des Startvorgangs der jeweiligen Ballenpresse über ihre Antriebswelle bereitzustellen und damit den Startvorgang zu überwinden.

Beide Lösungsansätze, nämlich die Verwendung einer dezidierten Anlaufeinrichtung als auch die Verwendung einer besonders leistungsfähigen Arbeitsmaschine, haben den Nachteil, dass ein erhöhter apparativer und mithin finanzieller Aufwand erforderlich ist, um einen reibungslosen Betrieb einer jeweiligen Ballenpresse zu gewährleisten. Zudem ist aus der EP 2 986 101 A0 eine Anlaufsteuerung einer Ballenpresse bekannt geworden, die mittels schaltbaren Planetengetrieben den Anlaufvorgang des Pressbetriebes steuern kann. Derartige Systeme haben insbesondere den Nachteil, dass die Getriebestruktur kostenintensiver ist.

Der vorliegenden Anmeldung liegt mithin die Aufgabe zugrunde, eine Ballenpresse bereitzustellen, mittels derer das oben beschriebene "Anfahrproblem" im Vergleich zum Stand der Technik einfacher gelöst wird.

Die zugrunde liegende Aufgabe wird erfindungsgemäß mittels einer landwirtschaftlichen Ballenpresse mit den Merkmalen des Anspruchs 1 gelöst. Vorteilhafte Ausgestaltungen ergeben sich aus den Unteransprüchen 2 bis 5.

Erfindungsgemäß weist die Ballenpresse mindestens eine Getriebeeinrichtung auf, die zwischen dem Schwungrad und dem Drehmomentanschluss angeordnet ist. Diese Getriebeeinrichtung umfasst mindestens zwei Schaltstufen, die unterschiedliche Übersetzungsverhältnisse aufweisen. Die Anordnung "zwischen dem Schwungrad und dem Drehmomentanschluss" bedeutet im Sinne der vorliegenden Anmeldung, dass eine Übertragung eines Drehmoments ausgehend von dem Drehmomentanschluss zu dem Schwungrad in jedem Falle nur über die Getriebeeinrichtung möglich ist. Dabei ist es grundsätzlich von nachrangiger Bedeutung, an welcher Stelle genau die Getriebeeinrichtung sich befindet.

Bevorzugt ist die Getriebeeinrichtung unmittelbar dem Drehmomentanschluss nachgeschaltet, sodass eine Antriebswelle der Getriebeeinrichtung von einer sich ausgehend von dem Drehmomentanschluss erstreckenden Abtriebswelle gebildet ist, während die Abtriebswelle der Getriebeeinrichtung sich weiter in Richtung des Schwungrades erstreckt. Alternativ ist es auch denkbar, dass die Getriebeeinrichtung gewissermaßen "in" der Übertragungswelle angeordnet ist, die entsprechend in zwei Abschnitte, nämlich einen Antriebswellenabschnitt diesseits der Getriebeeinrichtung sowie einen Abtriebswellenabschnitt jenseits der Getriebeeinrichtung, unterteilt ist. Aufgrund der geometrischen Verhältnisse ist die Übertragungswelle jedoch oftmals schräg orientiert, um das von dem Drehmomentanschluss übernommene Drehmoment in Richtung des räumlich höher gelegenen Schwungrades und schließlich des Verdichtungsorgans zu übertragen, und ist daher oftmals weniger gut für die Anordnung einer Getriebeeinrichtung geeignet. Eine entsprechende Ausführung ist in dem nachstehenden Ausführungsbeispiel veranschaulicht.

Die erfindungsgemäße Ballenpresse hat viele Vorteile. Insbesondere ist es mittels der Getriebeeinrichtung möglich, das auf die Abtriebswelle der Getriebeeinrichtung wirkende Drehmoment mittels einer entsprechenden Einstellung des Übersetzungsverhältnisses einer jeweiligen Schaltstufe der Getriebeeinrichtung derart einzustellen, dass das Drehmoment ausreicht, um das Anfahren der Ballenpresse während deren Startbetrieb trotz eines besonders massiven und trägen Schwungrades und trotz etwaigen auf das Verdichtungsorgan wirkenden Lastspitzen zu ermöglichen. Um gleichwohl nach dem Startbetrieb in einen normalen Arbeitsbetrieb der Ballenpresse übergehen zu können, verfügt die Getriebeeinrichtung über mindestens eine zweite Schaltstufe, die ein gegenüber der im Rahmen des Startbetriebs verwendeten Schaltstufe geringeres Übersetzungsverhältnis aufweist. Auf diese Weise kann der Hauptverdichter schließlich auf seine "normale" Betriebsgeschwindigkeit gebracht werden. Im Ergebnis kann die erfindungsgemäße Ballenpresse mit vergleichsweise schwachen Arbeitsmaschinen betrieben werden und gleichwohl zuverlässig starten. Sobald nach dem Abschluss des Startvorgangs der Ballenpresse sich ein nominales Arbeitsdrehmoment an der Antriebswelle der Arbeitsmaschine aufgebaut hat, sind auch schwächere Arbeitsmaschinen in der Regel zum Betrieb einer Ballenpresse in deren Arbeitsbetrieb geeignet. Die Notwendigkeit eines wiederholten Aktivierens und Deaktivierens der Antriebswelle der Arbeitsmaschine sowie der damit einhergehende erhöhte Verschleiß entfallen. Grundsätzlich wird mittels der Erfindung sogar die Möglichkeit eröffnet, die Schwungräder von Ballenpressen noch schwerer als bisher auszubilden.

Besonders bevorzugt ist dabei eine Getriebeeinrichtung, die lediglich über genau zwei Schaltstufen verfügt. Eine solche Getriebeeinrichtung ist ausreichend, um das bekannte Anfahrproblem zu lösen, ist jedoch aufgrund ihrer besonders niedrigen Komplexität vergleichsweise günstig in der Herstellung sowie wenig fehleranfällig in der Anwendung. Auch weist eine solche Getriebeeinrichtung ein vergleichsweise geringes Beschädigungsrisiko auf, sodass ein Ausfallrisiko der erfindungsgemäßen Ballenpresse insgesamt gegenüber solchen Ballenpressen des Standes der Technik nicht erhöht ist oder ggf. sogar verringert ist. Letzteres ist insbesondere im Hinblick auf die oben genannte Schrift zum Stand der Technik ein wesentlicher Vorteil, da die dort vorgeschlagene Anlaufeinrichtung aufgrund ihrer Komplexität ein erhebliches Risiko aufweist, beschädigt zu werden oder auf sonstige Weise unplanmäßig auszufallen.

In einer vorteilhaften Ausgestaltung der erfindungsgemäßen Ballenpresse beträgt des Übersetzungsverhältnis von der Antriebswelle auf die Abtriebswelle der Getriebeeinrichtung in zumindest einer der Schaltstufen mindestens 1,5, vorzugsweise mindestens 2,0, weiter vorzugsweise mindestens 2,5. Mittels derart hoher Übersetzungsverhältnisse wird vor allem das Ziel erreicht, dass selbst größere Ballenpressen mittels vergleichsweise leistungsschwacher Arbeitsmaschinen betrieben werden können, da selbst bei einem geringen "Eingangsdrehmoment" seitens der jeweiligen Arbeitsmaschine in der jeweiligen Schaltstufe ein ausreichendes "Startdrehmoment" erzeugt wird, mittels dessen die jeweilige Ballenpresse gestartet bzw. angefahren werden kann.

Weiterhin kann es von Vorteil sein, wenn das Übersetzungsverhältnis von der Antriebswelle auf die Abtriebswelle der Getriebeeinrichtung in mindestens einer der Schaltstufen kleiner oder gleich 1,0 ist. Eine solche Schaltstufe ist nach Abschluss des Startbetriebs der jeweiligen Ballenpresse besonders gut für den Arbeitsbetrieb derselben geeignet, wobei mittels des vergleichsweise geringen Übersetzungsverhältnisses sichergestellt wird, dass das Verdichtungsorgan mit einer ausreichend hohen Drehzahl arbeitet und auf diese Weise eine gewünscht hohe Pressleistung liefert.

Erfindungsgemäß ist die Getriebeeinrichtung derart ausgebildet, dass sie automatisch zwischen ihren Schaltstufen schaltbar ist. Dies ist insoweit von Vorteil, als ein manuelles Umschalten mittels eines Maschinenführers der Arbeitsmaschine nicht notwendig ist, um von dem Startbetrieb in den Arbeitsbetrieb der Ballenpresse zu wechseln. Auch wird mittels des automatischen Umschaltens eine Fehlbedienung der Ballenpresse grundsätzlich ausgeschlossen.

Erfindungsgemäß verfügt die Ballenpresse über einen Aktuator, mittels dessen eine Kupplung der Getriebeeinrichtung zwischen deren Schaltstufen schaltbar ist. Der Aktuator kann insbesondere pneumatische, elektrisch oder hydraulisch betrieben sein, wobei ein Schaltsignal zur Aktivierung und/oder Deaktivierung des Aktuators von einer Steuereinheit erzeugt werden kann.

Die Ballenpresse weist in einer weiterhin bevorzugten Ausgestaltung mindestens einen Drehzahlmesser auf, mittels dessen eine Drehzahl einer Antriebswelle und/oder eine Drehzahl einer Abtriebswelle der Getriebeeinrichtung erfassbar ist. Vorzugsweise wirken die Antriebswelle und die Abtriebswelle der Getriebeeinrichtung jeweils mit einem eigenen Drehzahlmesser zusammen. Die Verwendung eines oder mehrerer Drehzahlmesser bietet den Vorteil, dass auf Basis von Informationen betreffend die Drehzahlen der Antriebs- und/oder Abtriebswelle der Getriebeeinrichtung ein Zustand der Ballenpresse als solcher erfasst werden kann. Weiterhin ist es denkbar, die erfasste Information zur Grundlage einer Entscheidung betreffend den Wechsel der Schaltstufen der Getriebeeinrichtung zu machen.

Die erfindungsgemäße Ballenpresse weist mindestens eine Steuereinheit auf, mittels derer in vorteilhafter Weise Informationen betreffend die Drehzahl der Antriebswelle der Getriebeeinrichtung und/oder die Drehzahl der Abtriebswelle der Getriebeeinrichtung auswertbar sind, sodass die Steuereinheit dazu eingerichtet ist, einen Aktuator zur Betätigung der Kupplung der Getriebeeinrichtung anzusteuern und auf diese Weise einen automatischen Wechsel der Schaltstufen der Getriebeeinrichtung vorzunehmen. Hierzu ist die Steuereinheit mittels Datenleitungen sowohl mit dem Drehzahlmesser bzw. den Drehzahlmessern als auch mit dem Aktuator verbunden.

Vorteilhafterweise ist ferner das Schwungrad zumindest mittelbar, vorzugsweise unmittelbar, mit einem Drehzahlmesser verbunden, sodass eine Bestimmung der Drehzahl des Schwungrades möglich ist. Ein solcher Drehzahlmesser kann beispielsweise an der Übertragungswelle angeordnet sein. Der Drehzahlmesser ist vorteilhafterweise ebenfalls mit der Steuereinheit verbunden, sodass erfasste Informationen betreffend die Drehzahl des Schwungrades bei der Steuerung der Getriebeeinrichtung berücksichtigt werden können. Somit kann es - wie nachstehend im Detail beschrieben - beispielsweise von Interesse sein, einen Wechsel der Schaltstufe der Getriebeeinrichtung nur dann vorzunehmen, wenn eine Drehzahl des Schwungrades niedriger ist als eine Drehzahl der Abtriebswelle der Getriebeeinrichtung.

In einer weiterhin bevorzugten Ausführungsform der erfindungsgemäßen Ballenpresse umfasst selbige mindestens einen Freilauf, der zwischen dem Schwungrad und der Getriebeeinrichtung angeordnet ist. Dieser Freilauf ist dazu geeignet, eine drehmomentübertragende Verbindung zwischen dem Schwungrad und der Abtriebswelle der Getriebeeinrichtung entweder herzustellen oder aufzuheben. Insbesondere ist der Freilauf vorteilhafterweise derart ausgeführt, dass er eine Übertragung eines Drehmoments lediglich ausgehend von der Abtriebswelle in Richtung des Schwungrades ermöglicht, jedoch eine Übertragung eines Drehmoments in umgekehrte Richtung nicht zu leisten vermag. Auf diese Weise wird sichergestellt, dass im Falle einer höheren Drehzahl des Schwungrades oder der mit diesem verbundenen Übertragungswelle gegenüber der Drehzahl der Abtriebswelle der Getriebeeinrichtung kein Energiefluss ausgehend von dem Schwungrad in die Getriebeeinrichtung und schließlich zurück zu der Arbeitsmaschine stattfinden kann. Der Freilauf ermöglicht somit beispielsweise ein Abbremsen der Abtriebswelle der Getriebeeinrichtung, ohne dass gleichzeitig das Schwungrad abgebremst wird.

In verfahrenstechnischer Hinsicht wird die zugrunde liegende Aufgabe erfindungsgemäß mittels eines Verfahrens den Merkmalen des Anspruchs 6 gelöst.

Das erfindungsgemäße Verfahren ist zunächst durch den Verfahrensschritt gekennzeichnet, dass mittels einer Getriebeeinrichtung eine Drehzahl einer mit dem Drehmomentanschluss zusammenwirkenden Antriebswelle der Getriebeeinrichtung auf eine Drehzahl einer dem Drehmomentanschluss abgewandte Abtriebswelle der Getriebeeinrichtung übersetzt wird. In einem weiteren Verfahrensschritt wird die Übersetzung der genannten Drehzahl in einem Startbetrieb der Ballenpresse, in dem die Ballenpresse ausgehend von einem ausgeschalteten Zustand gestartet bzw. angefahren wird, in einer ersten Schaltstufe vorgenommen wird, während besagte Übersetzung in einem Arbeitsbetrieb der Ballenpresse, in dem sie bestimmungsgemäß zum Pressen von Material verwendet wird, mittels einer zweiten Schaltstufe der Getriebeeinrichtung vorgenommen wird.

Das beschriebene Verfahren ist mittels der erfindungsgemäßen Ballenpresse besonders einfach durchführbar. Die sich ergebenden Vorteile sind vorstehend bereits dargelegt. Insbesondere wird die Möglichkeit eröffnet, die Leistung der Arbeitsmaschine, mittels derer die Ballenpresse betrieben wird, in der ersten Schaltstufe während des Startbetriebs der Ballenpresse derart zu übersetzen, dass die Abtriebswelle der Getriebeeinrichtung bei vergleichsweise niedriger Drehzahl mit einem vergleichsweise hohen Drehmoment beaufschlagt wird. Dieses Drehmoment ist sodann dazu geeignet, das Verdichtungsorgan selbst entgegen etwaiger Belastungsspitzen zuverlässig anzufahren und auf diese Weise eine Überlastung der Arbeitsmaschine zu vermeiden. Der Wechsel in die zweite Schaltstufe ermöglicht sodann einen typischen Betrieb der Ballenpresse unter Verwendung einer "normalen" Drehzahl des Schwungrades und verbunden damit einer "normalen" Arbeitsgeschwindigkeit des Verdichtungsorgans. Hierzu ist das Übersetzungsverhältnis der Getriebeeinrichtung in der zweiten Schaltstufe gegenüber dem Übersetzungsverhältnis der ersten Schaltstufe reduziert.

Ein Wechsel zwischen den Schaltstufen der Getriebeeinrichtung wird automatisch vorgenommen, wobei die automatische Schaltung bevorzugt in Abhängigkeit von einem Drehzahlverhältnis vorgenommen wird, das zwischen Drehzahlen der Abtriebswelle der Getriebeeinrichtung und dem Schwungrad vorliegt. Auch ist eine automatische Schaltung zwischen den Schaltstufen der Getriebeeinrichtung in Abhängigkeit absoluter Drehzahlen der Antriebswelle und/oder der Abtriebswelle denkbar, wobei eine Kombination beider Vorgehensweisen, das heißt eine Schaltung sowohl in Abhängigkeit von absoluten Drehzahlen als auch von mindestens einem Drehzahlverhältnis, besonders zu bevorzugen ist.

Dies betrifft beispielsweise die Wahl einer ersten Schaltstufe im Zuge der Inbetriebnahme der jeweiligen Ballenpresse, im Zuge derer zunächst festgestellt wird, dass die Antriebswelle der Getriebeeinrichtung stillsteht, das heißt eine Drehzahl von n=0 U/min aufweist. Ausgehend von diesem Zustand wird sodann die erste, mit einem hohen Übersetzungsverhältnis ausgestattete Schaltstufe ausgewählt. Ein Wechsel der Schaltstufe auf diejenige, die für einen Arbeitsbetrieb der Ballenpresse vorgesehen ist, kann sodann beispielsweise in Abhängigkeit einer erreichten Drehzahl der Abtriebswelle der Getriebeeinrichtung vorgenommen werden. Als solche "Grenzdrehzahl" ist zum Beispiel ein Wert von 1000 Umdrehungen/min denkbar. Insbesondere kann die Grenzdrehzahl der maximal möglichen Drehzahl der Antriebswelle der Arbeitsmaschine entsprechen. Eine Erhöhung der Drehzahl der Antriebswelle kann beispielsweise schrittweise vorgenommen werden, wobei nach jedem Erhöhungsschritt eine separate Prüfung vorgenommen wird, ob die jeweils vorgesehene Grenzdrehzahl erreicht ist, wobei bei negativem Ergebnis ein weiterer Erhöhungsschritt durchgeführt wird, bis ein positives Ergebnis vorliegt.

Ist die Grenzdrehzahl erreicht, sollte die Drehzahl des mit der Abtriebswelle der Getriebeeinrichtung verbundenen Schwungrades zumindest im Wesentlichen identisch zu der Drehzahl der Antriebswelle der Getriebeeinrichtung sein. Vor dem Wechsel auf die für den Arbeitsbetrieb der Ballenpresse vorgesehene Schaltstufe kann es sodann von Vorteil sein, die Drehzahl zumindest der Antriebswelle der Arbeitsmaschine zu reduzieren, sodass analog die Drehzahlen der Antriebs- sowie Abtriebswelle der Getriebeeinrichtung sinken, insbesondere unter die Drehzahl des Schwungrades. Sofern ein Freilauf zwischen der Abtriebswelle der Getriebeeinrichtung und dem Schwungrad installiert ist, kann das Schwungrad daraufhin seine erhöhte Drehzahl im Wesentlichen beibehalten und wird nicht durch die Getriebeeinrichtung gebremst. Die Drehzahl der Abtriebswelle sinkt derweil.

In einem solchen, dann im Wesentlichen von Kräften freien Zustand der Getriebeeinrichtung kann in die nächste Schaltstufe umgeschaltet werden. Anschließend kann die Drehzahl der Antriebswelle der Arbeitsmaschine abermals erhöht werden, insbesondere schrittweise, bis die Drehzahl des Schwungrades und damit die Leistung des Verdichtungsorgans den Wert einer vorbestimmten Arbeitsdrehzahl erreicht hat. Hierzu ist es nicht unbedingt erforderlich, unmittelbar die Drehzahl des Schwungrades zu erfassen, da letztere nach Steigerung der Drehzahl der Antriebswelle der Arbeitsmaschine typischerweise die oben beschriebene Grenzdrehzahl übersteigt. Nach Erreichen der Arbeitsdrehzahl ist die Ballenpresse schließlich einsatzbereit.

In einer Weiterbildung des erfindungsgemäßen Verfahrens werden Informationen betreffend die Drehzahlen von Antriebswelle und Abtriebswellen der Getriebeeinrichtung an eine Steuereinheit übermittelt, mittels derer diese Informationen sodann verarbeitbar sind.

Die Steuereinheit ist dazu geeignet, das vorstehend betriebene Verfahren automatisch zu steuern, sodass ein manueller Eingriff eines Maschinenführers der die Ballenpresse betreibenden Arbeitsmaschine nicht notwendig ist. Vorteilhafterweise steuert die Steuereinheit in Abhängigkeit der Informationen betreffend die Drehzahlen an der Getriebeeinrichtung einen Aktuator an, der einen Wechsel der jeweiligen Schaltstufe der Getriebeeinrichtung in eine andere Schaltstufe vornimmt.

Es kann von Vorteil sein, wenn Informationen betreffend eine Drehzahl der Antriebswelle der Getriebeeinrichtung und/oder eine Drehzahl der Abtriebswelle der Getriebeeinrichtung und/oder ein Drehzahlverhältnis zwischen Drehzahlen der Abtriebswelle der Getriebeeinrichtung und dem Schwungrad an einen Maschinenführer der Arbeitsmaschine weitergeleitet werden. Letzteren ist hierdurch die Möglichkeit eröffnet, einen Betriebszustand der Ballenpresse zu erfassen und basierend darauf beispielsweise Defekte zu erkennen oder lediglich mindestens einen Betriebsparameter der Ballenpresse zu verändern.

Die erfindungsgemäße Ballenpresse sowie das erfindungsgemäße Verfahren werden nachstehend anhand eines Ausführungsbeispiels, das in den Figuren dargestellt ist, näher erläutert. Es zeigt:
- Fig. 1:: Einen vertikalen Längsschnitt durch eine erfindungsgemäße Ballenpresse,
- Fig. 2:: Eine schematische Darstellung eines Teils eines Antriebsstrangs der Ballenpresse gemäß Figur 1, wobei sich eine Getriebeeinrichtung im Leerlauf befindet,
- Fig. 3:: Die schematische Darstellung gemäß Figur 2, wobei sich die Getriebeeinrichtung in einer ersten Schaltstufe befindet,
- Fig. 4:: Die schematische Darstellung gemäß Figur 2, wobei sich die Getriebeeinrichtung in einer zweiten Schaltstufe befindet,
- Fig. 5:: Eine perspektivische Darstellung eines Teils des Antriebsstrangs der erfindungsgemäßen Ballenpresse gemäß Figur 1 und
- Fig. 6:: Ein Ablaufdiagramm für ein erfindungsgemäßes Verfahren zum Betrieb der Ballenpresse gemäß Figur 1.

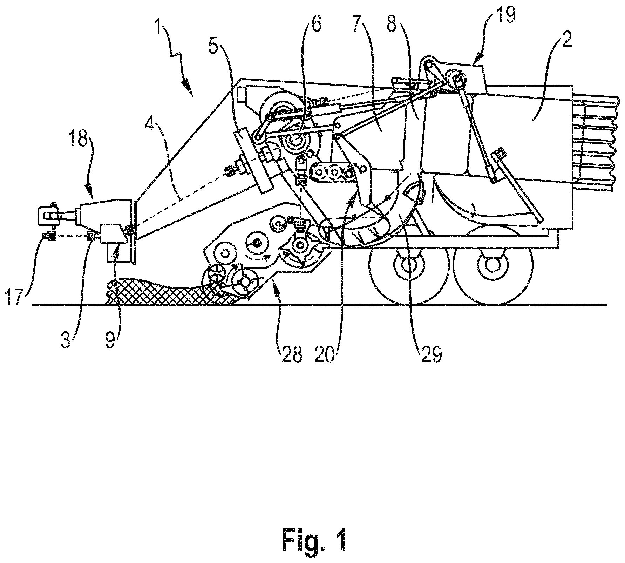

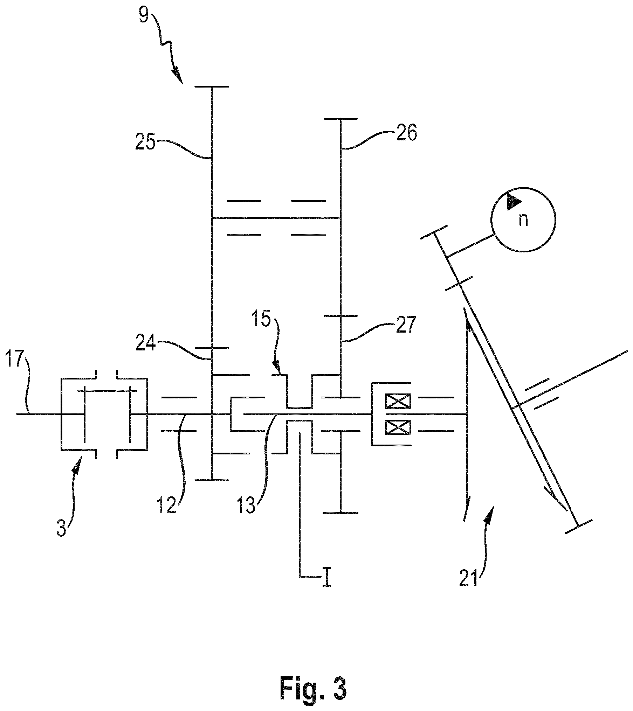

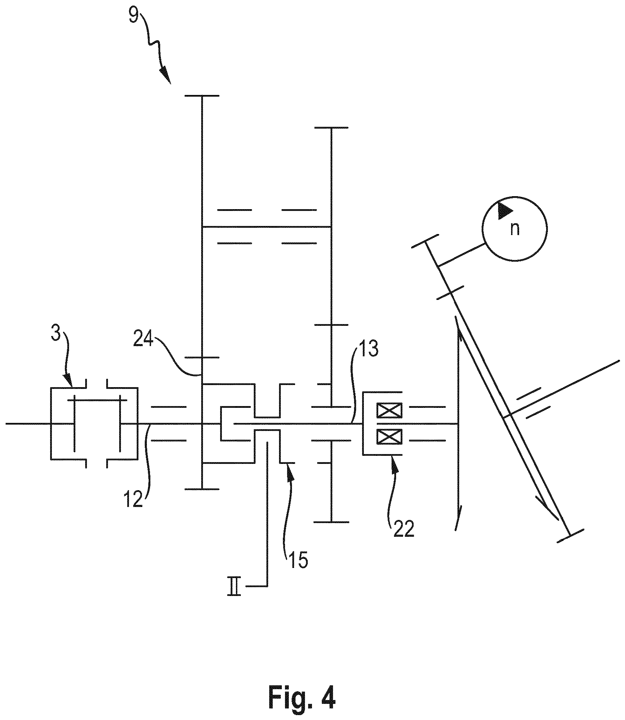

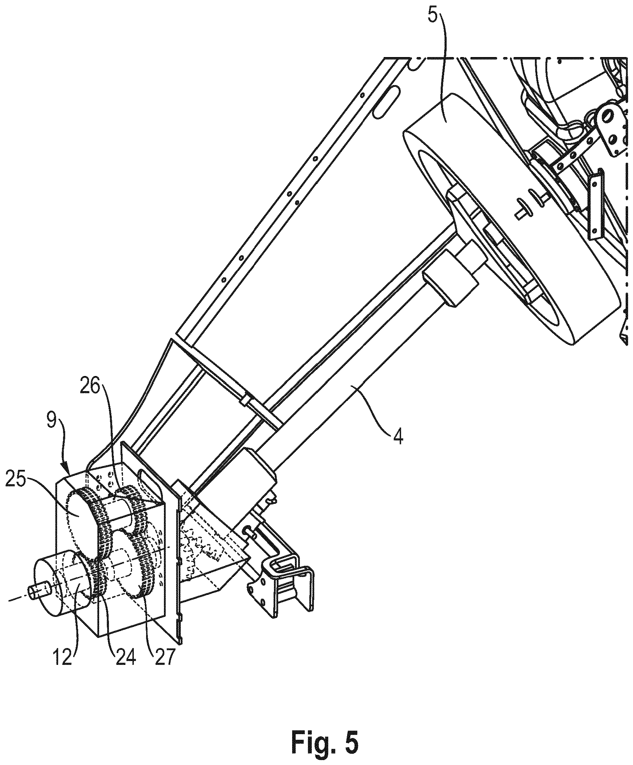

Das Ausführungsbeispiel, das in den **Figuren 1 bis 6** dargestellt ist, umfasst eine erfindungsgemäße Ballenpresse **1,** die dazu geeignet ist, Material, insbesondere Stroh, zu quaderförmigen Ballen **2** zu pressen. Hierzu umfasst die Ballenpresse **1** ein Verdichtungsorgan **7,** das innerhalb eines Verdichtungskanals **8** oszillierend hin und her bewegbar ist. Das zu verdichtende Material nimmt die Ballenpresse **1** mittels einer Aufnehmevorrichtung **28** von einem Untergrund auf und führt es dem Verdichtungskanal **8** über einen Zuführkanal **29** zu. Eine Beförderung des Materials von dem Zuführkanal **29** in den Verdichtungskanal **8** erfolgt dabei mittels einer Raffeinrichtung **20,** die mittels einer zyklischen Bewegung von unten nachströmendes Material sukzessive in Richtung des Verdichtungskanals **8** fördert.

Die erfindungsgemäße Ballenpresse **1** ist mittels einer Schleppkupplung **18** mit einer in den Figuren nicht dargestellten Arbeitsmaschine bewegbar. Letztere umfasst eine Antriebswelle **17,** die auch als Zapfwelle oder als "power take off" bezeichnet werden kann. Zur Abnahme eines von der Antriebswelle **17** bereitgestellten Drehmoments weist die Ballenpresse **1** einen Drehmomentanschluss 3 auf, der in Drehmoment übertragender Weise mit der Antriebswelle **17** gekoppelt ist. Das abgenommene Drehmoment wird sodann unter anderem mittels einer Übertragungswelle **4** auf ein Schwungrad **5** übertragen, das seinerseits wiederum in Drehmoment übertragender Weise mit einer Bewegungseinrichtung **6** zusammenwirkt. Typischerweise wirkt die Übertragungswelle **4** aufgrund der geometrischen Gegebenheiten mit einem Umlenkgetriebe **21** zusammen, mittels dessen eine Umlenkung nach oben stattfindet, um das typischerweise gegenüber dem Drehmomentanschluss **3** höhergelegen Schwungrad **5** anzuschließen. Die Bewegungseinrichtung **6** dient dazu, zumindest einen Teil des von der Arbeitsmaschine abgenommenen Drehmoments derart auf das Verdichtungsorgan **7** zu übertragen, dass letzteres die beschriebene Hin-und-her-Bewegung innerhalb des Verdichtungskanals **8** ausführt. Weitere Anteile des von der Arbeitsmaschine zur Verfügung gestellten Drehmoments werden zum Antrieb weiterer Einrichtungen der Ballenpresse **1** verwendet, beispielsweise für die Aufnahmevorrichtung **28,** die Raffeinrichtung **20** sowie eine Bindeeinrichtung **19,** mittels derer fertige Ballen **2** mit einer Bindeschnur einfassbar und auf diese Weise fertigstellbar sind.

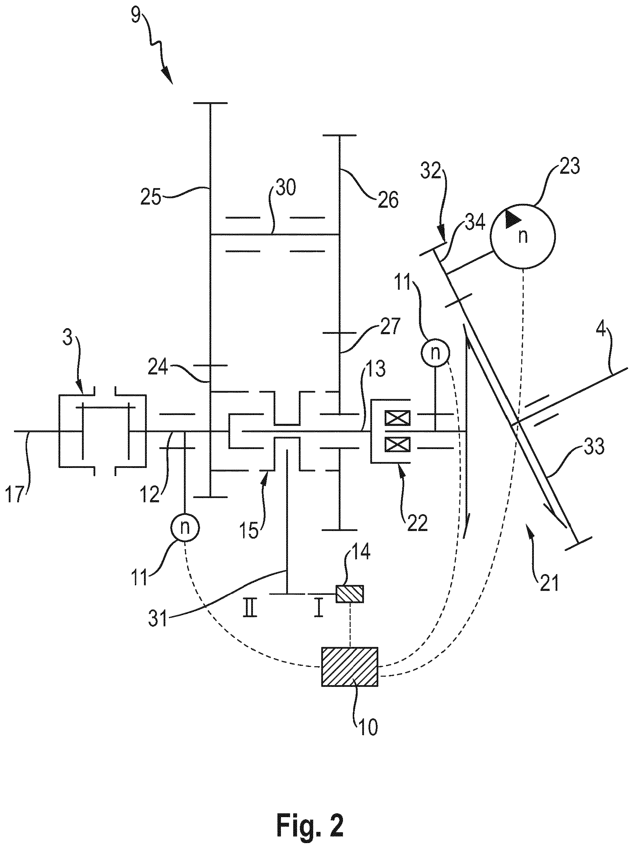

Erfindungsgemäß umfasst die Ballenpresse **1** in ihrem Antriebsstrang eine Getriebeeinrichtung **9.** Diese ist in dem gezeigten Beispiel zwischen dem Drehmomentanschluss **3** und der Übertragungswelle **4** angeordnet. Wie sich insbesondere aus den **Figuren 2 bis 4** ergibt, weist die hier dargestellte Getriebeeinrichtung **9** zwei Schaltstufen auf. Eine dem Drehmomentanschluss **3** zugewandte Antriebswelle **12** der Getriebeeinrichtung **9** dient dazu, ein mittels des Drehmomentanschlusses **3** von der Arbeitsmaschine abgenommenes Drehmoment an die Getriebeeinrichtung **9** zu übertragen. Weiterhin verfügt die Getriebeeinrichtung **9** über eine Abtriebswelle **13,** die sich ausgehend von der Getriebeeinrichtung **9** in eine dem Drehmomentanschluss **3** abgewandte Richtung erstreckt und somit das Drehmoment weiter in Richtung des Schwungrades **5** überträgt.

Die hier dargestellte Getriebeeinrichtung 9 umfasst insgesamt vier Zahnräder **24, 25, 26, 27,** wobei jeweils zwei Zahnräder **24, 25, 26, 27** zu Zahnradpaaren kombiniert sind und unmittelbar miteinander kämmen. Ein erstes Zahnrad **24** ist unmittelbar mit der Antriebswelle **12** der Getriebeeinrichtung **9** gekoppelt und kämmt mit einem zweiten Zahnrad **25.** Die beiden Zahnräder **24, 25** bilden gemeinsam das erste Zahnradpaar. Das zweite Zahnrad **25** ist mittels einer Koppelwelle **30** mit einem dritten Zahnrad **26** gekoppelt, sodass sich eine Rotation des zweiten Zahnrades **25** unmittelbar auf das dritte Zahnrad **26** überträgt. Das dritte Zahnrad **26** kämmt wiederum seinerseits mit dem vierten Zahnrad **27** und ist mit letzterem zu dem zweiten Zahnradpaar verbunden. Das erste Zahnrad **24** sowie das vierte Zahnrad **27** sind jeweils in Drehmoment übertragender Weise mittels einer Kupplung **15** mit der Abtriebswelle **13** der Getriebeeinrichtung **9** verbindbar. Die Kupplung **15** ist wiederum zwischen zwei Schaltstufen schaltbar, wobei in Abhängigkeit der gewählten Schaltstufe ein Übersetzungsverhältnis von der Antriebswelle **12** auf die Abtriebswelle **13** veränderbar ist. In dem gezeigten Beispiel beträgt das Übersetzungsverhältnis in der ersten Schaltstufe 2 : 1, während es in der zweiten Schaltstufe etwa 1 : 1 beträgt.

Zur Überführung der Getriebeeinrichtung **9** ausgehend von einem in **Figur 2** dargestellten Leerlauf, in dem die Kupplung **15** keines der Zahnräder **24, 27** mit der Abtriebswelle **13** koppelt, in eine der Schaltstufen muss die Kupplung **15,** die in dem gezeigten Beispiel eine Schiebemuffe umfasst, in eine ihrer beiden Kuppelstellungen bewegt werden. Befindet sich die Kupplung **15** in ihrer ersten Kuppelstellung, liegt analog die Getriebeeinrichtung **9** in ihrer ersten Schaltstufe vor. In dieser ersten Kuppelstellung ist die Kupplung **15** mit dem vierten Zahnrad **27** verbunden, wobei die Kupplung **15** in Drehmoment übertragender Weise mit der Abtriebswelle **13** zusammenwirkt, wodurch schließlich ein Drehmomentfluss zwischen dem vierten Zahnrad **27** und der Abtriebswelle **13** hergestellt wird. Eine Übertragung des Drehmoments findet mithin ausgehend von der Antriebswelle **12** über das erste Zahnrad **24,** dass damit unmittelbar kämmend zweite Zahnrad **25,** die Koppelwelle **30,** das damit verbundene dritte Zahnrad **26** sowie das unmittelbar damit kämmend vierte Zahnrad **27** auf die Abtriebswelle **13** statt.

Das oben beschriebene hohe Übersetzungsverhältnis der ersten Schaltstufe der Getriebeeinrichtung 9 ist durch die stark voneinander abweichenden Durchmesser der beiden Zahnräder **24, 25** des ersten Zahnradpaares bedingt. Diese sind so ausgestaltet, dass der Durchmesser des zweiten Zahnrades **25** doppelt so groß ist wie derjenige des ersten Zahnrades **24.** Hierdurch ist das oben beschriebene Übersetzungsverhältnis von 2 : 1 bedingt. Die Durchmesser der beiden Zahnräder **26, 27** des zweiten Zahnradpaares sind in dem gezeigten Beispiel gleich ausgebildet, sodass hier keine weitere Übersetzung stattfindet.

Aufgrund der Übersetzung beträgt ein auf die Abtriebswelle **13** wirkendes Drehmoment in der ersten Schaltstufe der Getriebeeinrichtung **9** den doppelten Betrag des auf die Antriebswelle **12** wirkenden Drehmoments, während die Drehzahl der Abtriebswelle **13** den halben Betrag der Drehzahl der Antriebswelle **12** beträgt. Das auf die Abtriebswelle **13** wirkende Drehmoment wird im Weiteren mittels der Übertragungswelle **4** an das Schwungrad **5** übertragen. Auf diese Weise wird wie gewünscht bewirkt, dass selbst bei einem vergleichsweise geringen Antriebsdrehmoment, das mittels einer jeweiligen Arbeitsmaschine zur Verfügung gestellt wird, dem Schwungrad **5** und damit dem Verdichtungsorgan **7** ein vergleichsweise hohes Drehmoment zur Verfügung gestellt werden kann, um das eingangs erläuterte Anfahrproblem, das bei Ballenpressen zum Pressen quaderförmigen Ballen prinzipbedingt auftreten kann, zu lösen. Entsprechend wird die erste Schaltstufe der Getriebeeinrichtung **9** insbesondere im Rahmen eines Startbetriebs der Ballenpresse **1** verwendet, in dem die Ballenpresse **1** ausgehend von einem ausgeschalteten Zustand in Betrieb genommen wird.

Im Verhältnis zu dem genannten Startbetrieb ist es im Interesse eines zügigen Arbeitsfortschritts von Vorteil, die Drehzahl des Schwungrades **5** und mithin der des Verdichtungsorgans **7** gegenüber dem Startbetrieb zu steigern. Dabei versteht es sich, dass die Drehzahl der Abtriebswelle **13** durch Wirkung der ersten Schaltstufe gegenüber der Drehzahl der Antriebswelle **12** halbiert ist. Ist die Ballenpresse **1** jedoch einmal gestartet und das Schwungrad **5** mit genügend Energie "aufgeladen", ist die Ballenpresse **1** aufgrund des in dem Schwungrad **5** gespeicherten Drehmoments dazu in der Lage, Belastungsspitzen, die im Rahmen des Betriebs der Ballenpresse **1** an dem Verdichtungsorgan **7** auftreten können, zu überwinden. Mit anderen Worten bedarf es nicht dauerhaft während des Betriebs der Ballenpresse **1** der Abnahme eines besonders hohen Drehmoments von der Antriebswelle **17** der Arbeitsmaschine. Mithin kann im Rahmen eines Arbeitsbetriebs der Ballenpresse **1** das an der Abtriebswelle **13** zur Verfügung gestellte Drehmoment gegenüber dem Startbetrieb abgesenkt werden, wobei gleichzeitig die Drehzahl der Abtriebswelle **13** erhöht wird.

Letzteres wird in dem gezeigten Beispiel mittels eines Wechsels der Schaltstufe der Getriebeeinrichtung **9** von der ersten Schaltstufe hin zu der zweiten Schaltstufe bewirkt. Hierzu wird die Kupplung **15** in eine zweite Kuppelstellung überführt, in der das auf das erste Zahnrad **24** einwirkende Drehmoment unmittelbar auf die Abtriebswelle **13** übertragen wird. Besagtes Drehmoment ist in dem gezeigten Beispiel identisch zu denjenigen, dass auch auf die Antriebswelle **12** wirkt. Folglich beträgt das Übersetzungsverhältnis in der zweiten Schaltstufe der Getriebeeinrichtung **9** - wie vorstehend dargelegt - 1 : 1. Neben dem identischen Drehmoment weist die Abtriebswelle **13** nunmehr auch dieselbe Drehzahl auf wie die Antriebswelle **12.**

Die erfindungsgemäße Ballenpresse **1** ist derart ausgebildet, dass ein Wechsel der Schaltstufen der Getriebeeinrichtung 9 automatisch stattfinden kann. Hierzu wirkt die Getriebeeinrichtung **9** mit zwei Drehzahlmessern **11** zusammen, wobei jeweils einer der Drehzahlmesser **11** mit der Antriebswelle **12** bzw. der Abtriebswelle **13** verbunden ist. Die Drehzahlmesser **11** sind wiederum mittels Datenleitungen mit einer Steuereinheit **10** verbunden, die von den Drehzahlmessern **11** zur Verfügung gestellte Informationen betreffend die Drehzahlen der Antriebswelle **12** und der Abtriebswelle **13** verarbeiten kann. Die Steuereinheit **10** ist ihrerseits mittels einer weiteren Datenleitung mit einem Aktuator **14** verbunden, der auf einen Schalthebel **31** der Kupplung **15** einwirken kann. Hierdurch ist der Aktuator **14** dazu geeignet, die Schiebemuffe der Kupplung **15** zwischen der ersten und der zweiten Kuppelstellung zu bewegen.

Eine Ansteuerung des Aktuators **14** mittels der Steuereinheit **10** kann insbesondere in Abhängigkeit von Drehzahlen der Antriebswelle **12** und der Abtriebswelle **13** vorgenommen werden. Wie vorstehend bereits dargelegt ist es insbesondere denkbar, bei Feststellung einer Drehzahl von 0 U/min der Antriebswelle **12** im Moment des Starts der Ballenpresse 1 zunächst die erste Schaltstufe einzulegen und die Ballenpresse **1** für ihren Startbetrieb vorzubereiten. Sobald dann im Rahmen des Startbetriebs eine Grenzdrehzahl der Abtriebswelle **13** erreicht ist, kann die Drehzahl der Antriebswelle **17** der Arbeitsmaschine abgesenkt werden. Besagte Grenzdrehzahl beträgt in dem vorliegenden Beispiel 1000 U/min, kann jedoch selbstverständlich ebensogut einen anderen Wert aufweisen. Insbesondere kann die Grenzdrehzahl einer maximal möglichen Drehzahl der Antriebswelle **17** entsprechen. Aufgrund eines in der hier gezeigten Ausführungsform vorgesehenen Freilaufs **22,** der zwischen der Abtriebswelle **13** und die Übertragungswelle **4** angeordnet ist, wird das Schwungrad **5** nicht aufgrund der Absenkung der Drehzahl der Antriebswelle **17** und mithin der Abtriebswelle **13** gebremst, sondern kann frei und ungebremst weiterlaufen.

Mittels der Steuereinheit **10** ist überprüfbar, ob die Drehzahl insbesondere der Abtriebswelle **13** geringer ist als die Drehzahl des Schwungrades **5.** Hierzu ist die Steuereinheit **10** mittels einer weiteren Datenleitung mit einem Drehzahlmesser **23** verbunden, der unmittelbar mittels der Übertragungswelle **4** sowie eines weiteren Zahnradpaares **32** mit dem Schwungrad **5** gekoppelt ist. In Kenntnis des Durchmesserverhältnisses der beiden Zahnräder **33, 34** des Zahnradpaares **32** kann die Drehzahl des Schwungrades **5** ermittelt werden. Alternativ kann unmittelbar ein gewichteter Vergleich zwischen der Drehzahl der Abtriebswelle **13** und des Zahnrades **34** des Zahnradpaares **32** vorgenommen werden.

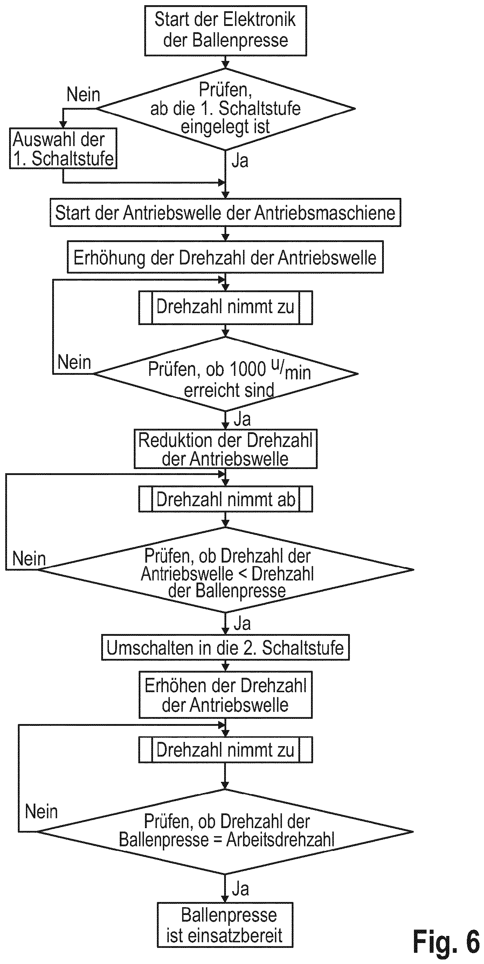

Sofern die Drehzahl der Abtriebswelle **13** unterhalb der Drehzahl des Schwungrades **5** liegt, kann die Ballenpresse **1** automatisch in ihren Arbeitsbetrieb überführt werden, wobei die Steuereinheit **10** den Aktuator **14** ansteuert, der daraufhin die Schiebemuffe der Kupplung **15** derart verschiebt, dass sich die Getriebeeinrichtung **9** sodann in ihrer zweiten Schaltstufe befindet. Anschließend kann die an der Antriebswelle **17** von der Arbeitsmaschine übergebene Leistung sukzessive gesteigert werden, wobei der Freilauf **22** in dem Moment, in dem die Drehzahl der Abtriebswelle **13** die Drehzahl der Übertragungswelle **4** und mithin die des Schwungrades **5** übersteigt, eine drehmomentübertragende Verbindung herstellt und damit eine weitere Beschleunigung des Schwungrades **5** über die Abtriebswelle **13** ermöglicht. Sobald schließlich das Schwungrad **5** und mit ihm das Verdichtungsorgan **7** ihre für den Betrieb vorgesehene Drehzahl erreicht haben, befindet sich die Ballenpresse **1** schließlich in ihrem Arbeitsbetrieb. Das vorstehend beschriebene Verfahren ist besonders gut anhand des Ablaufdiagramms gemäß **Figur 6** nachvollziehbar.

### Bezugszeichenliste

- 1: Ballenpresse
- 2: Ballen
- 3: Drehmomentanschluss
- 4: Übertragungswelle
- 5: Schwungrad
- 6: Bewegungseinrichtung
- 7: Verdichtungsorgan
- 8: Verdichtungskanal
- 9: Getriebeeinrichtung
- 10: Steuereinheit
- 11: Drehzahlmesser
- 12: Antriebswelle
- 13: Abtriebswelle
- 14: Aktuator
- 15: Kupplung
- 16: Freilauf
- 17: Antriebswelle
- 18: Schleppkupplung
- 19: Bindeeinrichtung
- 20: Raffeinrichtung
- 21: Umlenkgetriebe
- 22: Freilauf
- 23: Drehzahlmesser
- 24: Zahnrad
- 25: Zahnrad
- 26: Zahnrad
- 27: Zahnrad
- 28: Aufnehmevorrichtung
- 29: Zuführkanal
- 30: Koppelwelle
- 31: Schalthebel
- 32: Zahnradpaar
- 33: Zahnrad
- 34: Zahnrad

## Patentansprüche

1. Landwirtschaftliche Ballenpresse (1) zum Pressen von quaderförmigen Strohballen (2), umfassend
- mindestens einen Drehmomentanschluss (3),
- mindestens eine Übertragungswelle (4),
- mindestens ein Schwungrad (5),
- mindestens eine Bewegungseinrichtung (6),
- mindestens ein Verdichtungsorgan (7) sowie
- mindestens einen Verdichtungskanal (8),
wobei mittels des Drehmomentanschlusses (3) eine Drehmoment übertragende Verbindung zwischen der Ballenpresse (1) und einer Antriebswelle (17) einer die Ballenpresse (1) antreibenden Antriebsmaschine herstellbar ist,
wobei mittels der Übertragungswelle (4) ein mittels des Drehmomentanschluss (3) übernommenes Drehmoment in Richtung des Schwungrads (5) übertragbar ist,
wobei ein Drehmoment des Schwungrades (5) mittels der Bewegungseinrichtung (6) derart auf das Verdichtungsorgan (7) übertragbar ist, dass das Verdichtungsorgan (7) innerhalb des Verdichtungskanals (8) oszillierend hin und her bewegbar ist und auf diese Weise in dem Verdichtungskanal (8) befindliches Material sukzessive pressbar ist,
eine zwischen dem Schwungrad (5) und dem Drehmomentanschluss (3) angeordnete Getriebeeinrichtung (9), die mindestens zwei Schaltstufen umfasst,
wobei die Schaltstufen unterschiedliche Übersetzungsverhältnisse aufweisen
**dadurch gekennzeichnet, dass**
die Ballenpresse (1) eine Steuereinheit (10) umfasst, mittels derer die Getriebeeinrichtung (9) automatisch zwischen ihren Schaltstufen schaltbar ist und die Ballenpresse (1) einen Aktuator (14) umfasst, mittels dessen eine Kupplung (15) der Getriebeeinrichtung (9) zwischen den Schaltstufen schaltbar ist, wobei die Steuereinheit mittels einer Datenleitung mit dem Aktuator (14) verbunden ist, der auf einen Schalthebel (31) der Kupplung (15) einwirkt, sodass der Aktuator (14)eine Schiebemuffe der Kupplung (15) zwischen der ersten und der zweiten Kuppelstellung bewegt.

2. Ballenpresse (1) nach Anspruch 1, **dadurch gekennzeichnet, dass** das Übersetzungsverhältnis von einer Antriebswelle (12) auf eine Abtriebswelle (13) der Getriebeeinrichtung (9) in einer der Schaltstufen mindestens 1,5, vorzugsweise mindestens 2,0, weiter vorzugsweise mindestens 2,5 beträgt.

3. Ballenpresse (1) nach Anspruch 1 oder 2, **dadurch gekennzeichnet, dass** das Übersetzungsverhältnis von einer Antriebswelle (12) auf eine Abtriebswelle (13) der Getriebeeinrichtung (9) in einer der Schaltstufen kleiner oder gleich 1,0 ist.

4. Ballenpresse (1) nach einem der Ansprüche 1 bis 3, **gekennzeichnet durch** mindestens einen Drehzahlmesser (11), mittels dessen eine Drehzahl einer Antriebswelle (12) und/oder eine Drehzahl einer Abtriebswelle (13) der Getriebeeinrichtung (9) erfassbar ist, wobei vorzugsweise der Antriebswelle (12) und der Abtriebswelle (13) jeweils ein Drehzahlmesser (11) zugeordnet ist.

5. Ballenpresse (1) nach einem der Ansprüche 1 bis 4, **gekennzeichnet durch** einen Freilauf (16), der zwischen dem Schwungrad (5) und der Getriebeeinrichtung (9) angeordnet ist, wobei der Freilauf (16) dazu geeignet ist, eine Drehmoment übertragende Verbindung zwischen dem Schwungrad (5) und einer Abtriebswelle (13) der Getriebeeinrichtung (9) in Abhängigkeit eines Drehzahlverhältnisses zwischen einer Drehzahl des Schwungrads (5) und einer Drehzahl der (13) Abtriebswelle herzustellen oder aufzuheben.

6. Verfahren zum Betrieb einer Ballenpresse (1) nach einem der Ansprüche 1 bis 5, **gekennzeichnet durch** die folgenden Verfahrensschritte:
a) Die Ballenpresse (1) wird mittels des Drehmomentanschlusses (3) in Drehmoment übertragender Weise an eine Antriebswelle (17) einer Antriebsmaschine angeschlossen.
b) Die Antriebswelle (17) wird mit einem Drehmoment beaufschlagt, sodass das Drehmoment ausgehend von dem Drehmomentanschluss (3) mittels der Übertragungswelle (4) in Richtung des Schwungrades (5) übertragen wird, sodass das Schwungrad (5) aufgrund der Wirkung des Drehmoments beschleunigt wird.
c) Das Drehmoment des Schwungrades (5) wird mittels der Bewegungseinrichtung (6) auf das Verdichtungsorgan (7) übertragen, sodass das Verdichtungsorgan (7) oszillierend innerhalb des Verdichtungskanals (8) hin und her bewegt wird und auf diese Weise dazu geeignet ist, einen Ballen (2) zu pressen,
**gekennzeichnet durch** die folgenden Verfahrensschritte:
d) Mittels einer Getriebeeinrichtung (9) wird eine Drehzahl einer mit dem Drehmomentanschluss (3) zusammenwirkenden Antriebswelle (12) der Getriebeeinrichtung (9) auf eine dem Drehmomentanschluss (3) abgewandte Abtriebswelle (13) der Getriebeeinrichtung (9) übersetzt.
e) Die Übersetzung der Drehzahl der Antriebswelle (12) wird in einem Startbetrieb der Ballenpresse (1), in dem die Ballenpresse (1) ausgehend von einem ausgeschalteten Zustand gestartet wird, in einer ersten Schaltstufe und in einem Arbeitsbetrieb der Ballenpresse (1), in dem mittels der Ballenpresse (1) bestimmungsgemäß Material zu Ballen (2) gepresst wird, in einer zweiten Schaltstufe vorgenommen.

## Claims

1. An agricultural baler (1) for compressing square straw bales (2), comprising:
- at least one torque connection (3),
- at least one transmission shaft (4),
- at least one flywheel (5),
- at least one activating mechanism (6),
- at least one compressing means (7), as well as
- at least one compressing channel (8),
wherein, by means of the torque connection (3), a torque transmitting connection can be established between the baler (1) and a drive shaft (17) of a drive unit which drives the baler (1),
wherein, by means of the transmission shaft (4), a torque which is taken up by means of the torque connection (3) can be transmitted in the direction of the flywheel (5),
wherein a torque of the flywheel (5) can be transmitted by means of the activating mechanism (6) to the compressing means (7) in a manner such that the compressing means (7) can be oscillated backwards and forwards inside the compressing channel (8) and in this manner, material which is present in the compressing channel (8) can be successively compressed,
a transmission device (9) which comprises at least two gear settings being disposed between the flywheel (5) and the torque connection (3),
wherein the gear settings have different transmission ratios,
**characterized in that**
the baler (1) comprises a control unit (10) by means of which the transmission device (9) can be shifted automatically between its gear settings and the baler (1) comprises an actuator (14) by means of which a clutch (15) of the transmission device (9) can be shifted between the gear settings, wherein the control unit is connected by means of a data line to the actuator (14) which acts on a gear lever (31) of the clutch (15) so that the actuator (14) actuates a sliding sleeve of the clutch (15) between the first and the second clutch positions.

2. The baler (1) according to claim 1, **characterized in that** the transmission ratio between a drive shaft (12) and an output shaft (13) of the transmission device (9) in one of the gear settings is at least 1.5, preferably at least 2.0, more preferably at least 2.5.

3. The baler (1) according to claim 1 or claim 2, **characterized in that** the transmission ratio between a drive shaft (12) and an output shaft (13) of the transmission device (9) in one of the gear settings is less than or equal to 1.0.

4. The baler (1) according to one of claims 1 to 3, **characterized by** at least one rpm counter (11), by means of which a speed of a drive shaft (12) and/or a speed of an output shaft (13) of the transmission device (9) can be detected, wherein preferably, the drive shaft (12) and the output shaft (13) are associated with a respective rpm counter (11).

5. The baler (1) according to one of claims 1 to 4, **characterized by** a freewheel (16) which is disposed between the flywheel (5) and the transmission device (9), wherein the freewheel (16) is suitable for producing or removing a torque transmitting connection between the flywheel (5) and an output shaft (13) of the transmission device (9) as a function of a ratio of speeds between a speed of the flywheel (5) and a speed of the output shaft (13).

6. A method for operating a baler (1) according to one of claims 1 to 5, **characterized by** the following steps of the method:
a) the baler (1) is connected to a drive shaft (17) of a drive unit in a torque transmitting manner by means of the torque connection (3),
b) a torque is applied to the drive shaft (17) so that starting from the torque connection (3), the torque is transmitted by means of the transmission shaft (4) in the direction of the flywheel (5), so that the flywheel (5) is accelerated because of the action of the torque,
c) the torque of the flywheel (5) is transmitted to the compressing means (7) by means of the activating mechanism (6), so that the compressing means (7) is oscillated forwards and backwards inside the compressing channel (8) and in this manner is suitable for compressing a bale (2),
**characterized by** the following steps of the method:
d) by means of a transmission device (9), a speed of a drive shaft (12) which cooperates with the torque connection (3) of the transmission device (9) is transmitted to an output shaft (13) of the transmission device (9) which faces away from the torque connection (3),
e) the transmission of the speed of the drive shaft (12) is conducted in a start-up mode of the baler (1) in which the baler (1) is started up from a powered-down state, in a first gear setting, and in a working mode of the baler (1) in which material is intentionally compressed into bales (2) by means of the baler (1) is conducted in a second gear setting.

## Revendications

1. Presse à balles agricole (1) pour presser des balles de paille parallélépipédiques (2), incluant
- au moins un raccord de couple de rotation (3),
- au moins un arbre de transmission (4),
- au moins un volant d'inertie (5),
- au moins un équipement de déplacement (6),
- au moins un organe de compactage (7) ainsi que
- au moins un canal de compactage (8),
au moyen du raccord de couple de rotation (3), une liaison de transmission de couple de rotation pouvant être établie entre la presse à balles (1) et un arbre menant (17) d'une machine d'entraînement entraînant la presse à balles (1), au moyen de l'arbre de transmission (4), un couple de rotation acquis au moyen du raccord de couple de rotation (3) pouvant être transmis en direction du volant d'inertie (5),
un couple de rotation du volant d'inertie (5) pouvant être transmis au moyen de l'équipement de déplacement (6) à l'organe de compactage (7), de façon que l'organe de compactage (7) soit déplaçable en va-et-vient oscillant à l'intérieur du canal de compactage (8) et que, de cette façon, de la matière se trouvant dans le canal de compactage (8) puisse ainsi être successivement pressée,
un équipement de transmission (9) disposé entre le volant d'inertie (5) et le raccord de couple de rotation (3), lequel comprend au moins deux étages de transmission,
les étages de transmission présentant des rapports de transmission différents, **caractérisée en ce que** la presse à balles (1) inclut une unité de commande (10) au moyen de laquelle l'équipement de transmission (9) peut être commuté automatiquement entre ses étages de transmission, et la presse à balles (1) inclut un actionneur (14) au moyen duquel un accouplement (15) de l'équipement de transmission (9) peut être commuté entre les étages de transmission, l'unité de commande étant reliée au moyen d'une ligne de données à l'actionneur (14), lequel agit sur le levier de commande (31) de l'accouplement (15), de façon que l'actionneur (14) déplace un manchon coulissant de l'accouplement (15) entre les première et seconde position d'accouplement.

2. Presse à balles (1) selon la revendication 1, **caractérisée en ce que** le rapport de transmission d'un arbre menant (12) à un arbre mené (13) de l'équipement de transmission (9) dans un des étages de transmission est d'au moins 1,5, de préférence d'au moins 2,0, plus préférentiellement d'au moins 2,5.

3. Presse à balles (1) selon la revendication 1 ou 2, **caractérisée en ce que** le rapport de transmission d'un arbre menant (12) à un arbre mené (13) de l'équipement de transmission (9) dans un des étages de transmission est inférieur ou égal à 1,0.

4. Presse à balles (1) selon une des revendications 1 à 3, **caractérisée par** au moins un compte-tours (11) au moyen duquel peut être déterminé un nombre de tours d'un arbre menant (12) et/ou un nombre de tours d'un arbre mené (13) de l'équipement de transmission (9), de préférence un compte-tours (11) étant associé respectivement à l'arbre menant (12) et à l'arbre mené (13).

5. Presse à balles (1) selon une des revendications 1 à 4, **caractérisée par** un dispositif à roue libre (16) qui est disposé entre le volant d'inertie (5) et l'équipement de transmission (9), le dispositif à roue libre (16) étant apte à établir ou annuler une liaison de transmission de couple de rotation entre le volant d'inertie (5) et un arbre mené (13) de l'équipement de transmission (9) en fonction d'un rapport de nombre de tours entre un nombre de tours du volant d'inertie (5) et un nombre de tours de l'arbre mené (13).

6. Procédé de fonctionnement d'une presse à balles (1) selon une des revendications 1 à 5, **caractérisé par** les étapes de procédé suivantes :
a) la presse à balles (1) est reliée, au moyen du raccord de couple de rotation (3), de manière à transmettre un couple de rotation, à un arbre menant (17) d'une machine d'entraînement.
b) l'arbre menant (17) est soumis à un couple de rotation, de sorte qu'au moyen de l'arbre de transmission (4), le couple de rotation est transmis à partir du raccord de couple de rotation (3) en direction du volant d'inertie (5), de sorte qu'en raison de l'action du couple de rotation, le volant d'inertie (5) est accéléré.
c) le couple de rotation du volant d'inertie (5) est transmis à l'organe de compactage (7) au moyen de l'équipement de déplacement (6), de sorte que l'organe de compactage (7) est déplacé en va-et-vient oscillant à l'intérieur du canal de compactage (8) et, de cette façon, est apte à presser une balle (2),
**caractérisé par** les étapes de procédé suivantes :
d) au moyen d'un équipement de transmission (9), un nombre de tours d'un arbre menant (12) de l'équipement de transmission (9) coopérant avec le raccord de couple de rotation (3) est transmis à un arbre mené (13) de l'équipement de transmission (9) situé à l'opposé du raccord de couple de rotation (3).
e) la transmission du nombre de tours de l'arbre menant (12) est effectuée, lors d'un régime de démarrage de la presse à balles (1) dans lequel la presse à balles (1) est démarrée à partir d'un état hors prise, dans un premier étage de transmission et, dans un régime de travail de la presse à balles (1) dans lequel de la matière est, à dessein, pressée en balles (2) au moyen de la presse à balles (1), dans un second étage de transmission.
